# EUROPÄISCHE PATENTSCHRIFT

(11) **EP 3 191 293 B1**
(45) Veröffentlichungstag und Bekanntmachung des Hinweises auf die Patenterteilung: **09.11.2022**
(21) Anmeldenummer: 15763845.3
(22) Anmeldetag: 01.09.2015
(51) Int. Cl.: B30B 1/26, H02K 7/00, H02K 26/00, F16D 3/04

(54) **ANTRIEB EINER MASCHINE, DREHMOMENTMOTOR, KUPPLUNGSEINRICHTUNG, VORRICHTUNG ZUM BEARBEITEN VON WERKSTOFFEN UND VERWENDUNG EINES TORQUEMOTORS**
DRIVE FOR A MACHINE, TORQUE MOTOR, CLUTCH UNIT, DEVICE FOR PROCESSING MATERIALS, AND USE OF A TORQUE MOTOR
MÉCANISME D'ENTRAÎNEMENT D'UNE MACHINE, MOTEUR-COUPLE, APPAREIL D'ACCOUPLEMENT, SYSTÈME D'USINAGE DE MATÉRIAUX ET D'UTILISATION D'UN MOTEUR-COUPLE

(30) Priorität: 08.09.2014 DE 102014217918; 05.11.2014 DE 102014222592
(43) Veröffentlichungstag der Anmeldung: 19.07.2017
(73) Patentinhaber: SMS group GmbH, 40237 Düsseldorf (DE)
(72) Erfinder: KRIEGER, Willhelm, 51519 Odenthal (DE)
(74) Vertreter: Kross, Ulrich
(86) Internationale Anmeldenummer: PCT/EP2015/069937
(87) Internationale Veröffentlichungsnummer: WO 2016/037898

(56) Entgegenhaltungen:
- EP-A2- 2 489 892
- DE-A1- 4 203 931
- JP-A- H02 266 114
- US-A- 4 398 110
- US-A- 4 577 127
- US-A- 5 917 259

## Beschreibung

Die Erfindung betrifft einen Antrieb einer Maschine mit einem Antriebsmotor zum Antreiben einer um eine Wellendrehachse drehbaren Welle der Maschine und mit einer den Antriebsmotor und die Welle wirkverbindenden Kupplungseinrichtung zum Ausgleichen einer Relativbewegung zwischen der Welle und dem Antriebsmotor, bei welchem der Antriebsmotor ein die Welle umschließendes Rotorteil aufweist, an welchem ein um die Wellendrehachse rotierbares Kupplungsrotationsteil der Kupplungseinrichtung gelagert ist.

Die Erfindung betrifft auch einen Drehmomentmotor, insbesondere einen Torquemotor, mit einem Statorteil und mit einem um eine Rotordrehachse rotierbaren Rotorteil zum Treiben einer Welle.

Die Erfindung betrifft ferner eine Kupplungseinrichtung mit einem Kupplungsnabenteil, mit einem Kupplungsflanschteil und mit einer radial gegenüber dem Kupplungsflanschteil verlagerbaren Kulissenscheibe, bei welcher das Kupplungsnabenteil, das Kupplungsflanschteil und die Kulissenscheibe derart miteinander wirkverbunden sind, dass die Kulissenscheibe radial gegenüber dem Kupplungsflanschteil verlagerbar ist.

Die Erfindung betrifft des Weiteren eine Vorrichtung zum Bearbeiten von Werkstoffen, insbesondere eine mechanische Presse oder Exzenterpresse, mit einem Antrieb zum Antreiben eines Werkzeugs, wobei der Antrieb einen Drehmomentmotor und eine Kupplungseinrichtung umfasst.

Die Erfindung betrifft außerdem eine Verwendung eines Rotationskörpers eines eine Welle treibenden Torquemotors.

Insbesondere gattungsgemäße Antriebe sind beispielsweise als elektrische Direktantriebe von Antriebswellen etwa von Exzenterpressenantrieben, Kurbelpressenantrieben, Walzenantrieben oder dergleichen bekannt. Diese können beispielsweise an material- bzw. werkstückumformenden Umformmaschinen eingesetzt werden.

Bei diesen material- bzw. werkstückumformenden Umformmaschinen sind die Antriebswellen bzw. Arbeitswellen üblicherweise in einem Maschinengestell gleitgelagert. Im Betrieb dieser Umformmaschinen können sich beispielsweise durch thermische Einflüsse oder durch einen betriebsbedingten Verschleiß an Lagerstellen der Antriebswellen durchaus nennenswerte Achsverlagerungen bzw. Antriebswellenverlagerungen in axialer, aber auch in radialer Richtung bezüglich der Wellendrehachse einstellen, welche insbesondere bei der Verwendung von Direktantrieben mit insbesondere Torquemotoren Probleme bereiten können, da solche Achsverlagerungen von den Direktantrieben bauartbedingt nicht oder nur unzureichend unmittelbar selbst ausgeglichen werden können. Um derartige Achsverlagerungen der Antriebswellen nun hinreichend gut ausgleichen zu können, ist zwischen einem Antriebsmotor des Direktantriebs und der hierdurch anzutreibenden Antriebswelle eine Ausgleichskupplung zwischengeschaltet, die zu einer großen Baulänge aufgrund der axialen Anordnung führt. Aufgrund der teilweise extrem hohen zu übertragenden Drehmomente sind diese sich aus etlichen Bauteilen zusammensetzenden Ausgleichskupplungen oftmals ausfallanfällig und wartungsintensiv.

DE 42 03 931 A1 offenbart ein Antrieb gemäss dem Oberbegriff des Anspruchs 1.

US4577127 A, US4398110 A, EP2489892 A und US5917259 A beschreiben gattungsgemässen Antriebe.

Der Erfindung liegt die Aufgabe zugrunde, gattungsgemäße Antriebe derart weiterzuentwickeln, dass zumindest die vorstehend genannten Nachteile überwunden werden.

Die Aufgabe der Erfindung wird von einem Antrieb gemäss Anspruch 1 gelöst.

Dadurch, dass das Kupplungsrotationsteil radial beweglich an dem Rotorteil des Antriebsmotors unter Umgehung weiterer Verbindungsbauteile direkt angeordnet bzw. direkt gelagert ist, ist die vorliegende Kupplungseinrichtung besonders kompakt gebaut, so dass insbesondere diese Kupplungseinrichtung und auch der Antrieb der Maschine im Allgemeinen bauteilreduzierter und somit auch wesentlich kompakter gebaut werden kann.

Mit anderen Worten bedeutet dies, dass erfindungsgemäß wenigstens ein Funktionsbauteil des Antriebsmotors ein Funktionsteil der Kupplungseinrichtung ist oder vice versa, was wiederum bedingt, dass der erfindungsgemäße Antrieb insgesamt mit mindestens einem Funktionsbauteil weniger ausgestaltet werden kann. Hierdurch kann die Kupplungseinrichtung bzw. der gesamte Antrieb kompakter und bei entsprechender Ausgestaltung auch gewichtsmäßig leichter gebaut werden, wobei dennoch ein Wellenmittenversatz, also ein Wellenversatz radial zur Wellendrehachse, als auch ein Wellenversatz axial zur Wellendrehachse, also in Längsrichtung der Wellendrehachse, kompensiert werden kann.

Bei der vorliegenden Maschine handelt es sich um eine Arbeitsmaschine und bevorzugt um eine werkstückumformende Maschine.

Der Begriff "Antrieb" beschreibt im Sinne der vorliegenden Erfindung jegliche Antriebe von Maschinen, wie zum Beispiel Exzenterpressenantriebe, Kurbelpressenantriebe, Schmiedeantriebe, Walzenantriebe, oder dergleichen einer diesbezüglich material- bzw. werkstückumformenden Umformmaschine.

Insbesondere kann es sich bei dem vorliegenden Antrieb um einen Antrieb einer Antriebswelle, insbesondere einer Arbeitswelle, einer Maschine, eines Drehmomentmotors, einer Kupplungseinrichtung handeln.

Der vorliegende Antrieb ist idealerweise als elektrischer Direktantrieb ausgelegt, dass heißt, der Antriebsmotor ist direkt und damit bevorzugt ohne Zwischenschaltung eines Getriebes bzw. eines schaltbaren Übersetzungsgetriebes mit der drehbaren Welle wirkverbunden. Insofern dreht die Welle mit gleicher Drehzahl wie ein abtriebsseitiges Abtriebselement des Antriebsmotors.

Der Begriff "Antriebsmotor" beschreibt vorliegend speziell Drehmomente erzeugende Drehmomentmotoren, mittels welchen Antriebs- bzw. Arbeitswellen, insbesondere einer werkstückumformenden Maschine, getrieben bzw. um eine Wellendrehachse gedreht werden können. Bevorzugt ist der Antriebsmotor als ein Drehstrom-Synchronmotor mit Permanentmagnet ausgebildet.

Insbesondere kann der vorliegende Antriebsmotor ein Torquemotor sein. Torquemotoren sind aus dem Stand der Technik vielfältig bekannt. Durch ihre hohen Drehmomente bei relativ kleinen Drehzahlen eignen sie sich ausgezeichnet zum Treiben von Antriebswellen, insbesondere an werkstückumformenden Umformmaschinen.

Die Begrifflichkeit "Rotorteil" beschreibt hierbei ein um eine Rotationsachse des Antriebsmotors rotierendes Abtriebselement, welches abtriebsseitig beispielsweise als ringförmiges Rotorringelement des Rotorteils oder dergleichen ausgestaltet ist.

Der Begriff "Kupplungseinrichtung" kennzeichnet im Sinne der Erfindung Ausgleichskupplungen, mittels welchen Achsverlagerungen einer Antriebswelle, beispielsweise einer material- bzw. werkstückumformenden Umformmaschine, bzw. Antriebswellenverlagerungen insbesondere in radialer Richtung bezogen auf eine entsprechende Wellendrehachse der Antriebswelle, aber auch in axialer Richtung, ausgeglichen werden können.

Insbesondere kann mit der vorliegenden Kupplungseinrichtung eine Ausgleichskupplung in der Bauform einer Oldham^{®}-Kupplung realisiert werden. Oldham^{®}-Kupplungen besitzen den Vorteil, dass sie winkelgetreu sind.

Das diesbezügliche Kupplungsrotationsteil ist beispielsweise als rotationssymmetrisches Kupplungsscheibenteil oder dergleichen ausgebildet.

Eine besonders bevorzugte Ausführungsvariante sieht vor, dass das Kupplungsrotationsteil und das Rotorteil gemeinsam eine Kulissenführungseinheit ausgestalten, mittels welcher das rotierbare Kupplungsrotationsteil radial beweglich unmittelbar drehfest an dem Rotorteil gelagert ist. Hierdurch sind das Kupplungsrotationsteil und das Rotorteil direkt miteinander wirkverbunden.

Erfindungsgemäss, weist das Rotorteil wenigstens einen Kulissennocken auf, welcher in einer durch das Kupplungsrotationsteil ausgestalten Kulissennut angeordnet ist. Hierdurch kann das Rotorteil konstruktiv einfach ein Funktionsbauteil der vorliegenden Kupplungseinrichtung bilden, so dass der Antrieb wesentlich einfacher baut als bisherige Drehmomentantriebe gattungsgemäßer Umformmaschinen.

Vorzugsweise weist das Rotorteil ein Kulissennockenpaar auf, so dass eine günstigere Übertragung von Drehmomenten erreicht werden kann. Durch zwei sich - bezogen auf die Rotationsachse des Rotorteils - gegenüberliegende Kulissennocken kann das Rotorteil zudem rotationssymmetrisch ausgestaltet werden.

Ragt der wenigstens eine Kulissennocken axial über eine Stirnaxialseite des Rotorteils hinaus, kann das Rotorteil problemlos in einer in dem Kupplungsrotationsteil eingebrachten Kulissennut eingreifen.

Die Stirnaxialseite verläuft hierbei idealerweise rechtwinkelig zu der Längserstreckung der Wellendrehachse.

Ferner können Drehmomente vorteilhaft zwischen dem Rotorteil und dem Kupplungsrotationsteil übertragen werden, wenn der wenigstens eine Kulissennocken radial von der Wellendrehachse beabstandet angeordnet ist.

Um Radialbewegungen des Kupplungsrotationsteils auch gegenüber einem an der Welle gelagerten Kupplungsteil übertragen zu können, ist es vorteilhaft, wenn das Kupplungsrotationsteil radialbeweglich mit einem an der Welle gelagerten Kupplungsnabenteil der Kupplungseinrichtung wirkverbunden ist.

Eine konstruktiv einfache Wirkverbindung zwischen dem Kupplungsrotationsteil und dem Kupplungsnabenteil kann hergestellt werden, wenn das Kupplungsrotationsteil und das Kupplungsnabenteil mittels in Kulissennuten eingreifenden Kupplungsnasen miteinander wirkverbunden sind, wobei es frei wählbar sein kann, ob derartige Kulissennuten und Kupplungsnasen an dem Kupplungsrotationsteil und/oder an dem Kupplungsnabenteil vorhanden sind.

Der vorliegende Antrieb ist erfindungsgemäss besonders kompakt gebaut wenn sowohl der Antriebsmotor als auch die Kupplungseinrichtung derart um die Welle herum angeordnet sind, dass die Wellenendbereiche der Welle unverbaut sind. Hierdurch sind die beiden Wellenendbereiche insbesondere nicht durch den Antriebsmotor bzw. durch die Kupplungseinrichtung verbaut und somit frei zugänglich, so dass an den beiden Wellenendbereichen weitere Bauteile, wie etwa eine Haltebremse, ein Nocken-Schaltwerk, ein Drehwinkelgeber zur Drehwinkelerfassung oder dergleichen, angeordnet werden können.

Baulich besonders vorteilhaft ist es, wenn das Kupplungsrotationsteil ein Oldham^{®}-Scheibenteil einer Oldham^{®}-Kupplung umfasst und somit winkelgetreu ist.

Darüber hinaus wird die Aufgabe der Erfindung auch von einem Drehmomentmotor, insbesondere von einem Torquemotor, mit einem Statorteil und einem um eine Rotordrehachse rotierbaren Rotorteil zum Treiben einer Welle gelöst, wobei das Rotorteil ein erstes Kulissenführungsteil einer Kulissenführungseinheit einer den Drehmomentmotor und die Welle wirkverbindenden Kupplungseinrichtung umfasst.

Hierdurch ergibt sich hinsichtlich einer Koppelung mit einer entsprechend ausgestalteten Kupplungseinrichtung ein signifikant vereinfachter Aufbau des Drehmomentmotors, da dieser nur mit einem geeignet ausgebildeten weiteren Kulissenführungsteil zusammengefügt werden braucht.

Der bauliche Aufwand kann besonders gut reduziert werden, wenn das erste Kulissenführungsteil ein Kupplungsflanschteil der Kupplungseinrichtung ist.

Besonders vorteilhaft ist es, wenn das Rotorteil das erste Kulissenführungsteil körperlich ausgestaltet, da hierdurch eine äußerste kompakte Bauweise erzielbar ist.

Es versteht sich, dass dieses erste Kulissenführungsteil vielfältig ausgestaltet sein kann. Bevorzugt ist dieses erste Kulissenführungsteil durch ein Rotorringelement realisiert.

Das Rotorteil des vorliegenden Drehmomentmotors kann konstruktiv besonders einfach realisiert werden, wenn das erste Kulissenführungsteil wenigstens einen Axialnocken und/oder einen Axialnockennut umfasst.

Besonders vorteilhaft ist es, wenn diese Axialnocken und/oder Axialnockennuten und das Rotorteil bzw. das Rotorringelement bevorzugt auf einen gleichen oder zumindest ähnlichen Durchmesser angeordnet sind, da hierdurch die Umfangskraft relativ klein ausfallen, wodurch die Axialnocken und/oder Axialnockennuten unter Beachtung der Flächenpressen klein ausgeführt werden können. Dies gilt insbesondere im Zusammenhang mit dem hier beschriebenen Antrieb und speziell mit einer Exzenterpresse.

In den Drehmomentmotor kann baulich sehr einfach eine Kupplungseinrichtung im Sinne vorliegender Erfindung integriert werden, wenn die Kulissenführungseinheit ein weiteres Kulissenführungsteil aufweist, welches gegenüber dem ersten Kulissenführungsteil radial verlagerbar ist.

Hierbei ist es vorteilhaft, wenn das weitere Kulissenführungsteil ein Oldham^{®}-Scheibenteil einer Oldham^{®}-Kupplung umfasst, da eine Oldham^{®}-Kupplung winkelgetreu ist.

Des Weiteren wird die Aufgabe von einer Kupplungseinrichtung mit einem Kupplungsnabenteil, mit einem Kupplungsflanschteil und mit einer radial gegenüber dem Kupplungsflanschteil verlagerbaren Kulissenscheibe, bei welcher das Kupplungsnabenteil, das Kupplungsflanschteil und die Kulissenscheibe derart miteinander wirkverbunden sind, dass die Kulissenscheibe radial gegenüber dem Kupplungsflanschteil verlagerbar ist, wobei das Kupplungsflanschteil ein Rotorteil, insbesondere ein Rotorringelement des Rotorteils, eines Drehmomentmotors umfasst. Hierdurch kann der Drehmomentmotor, bei entsprechender Ausgestaltung, zumindest teilweise in die Kupplungseinrichtung integriert werden.

Eine diesbezügliche besonders vorteilhafte Ausführungsvariante sieht vor, dass das Kupplungsflanschteil beziehungsweise das Rotorteil einen Lagersitz einer Wälz- oder Gleitlagerung des Drehmomentmotors ausgestaltet, mittels welcher das Kupplungsflanschteil an einem Gehäuse des Drehmomentmotors drehbar fixiert ist, wodurch eine Verschmelzung zwischen der Kupplungseinrichtung und dem Drehmomentmotor sehr einfach realisiert werden kann.

Zweckmäßigerweise umfasst das Kupplungsflanschteil wenigstens einen Axialnocken und/oder wenigstens eine Axialnockennut, so dass eine drehfeste aber radial verschiebliche Wirkverbindung zu der Kulissenscheibe baulich einfach hergestellt werden kann.

Vorteilhaft ist, wenn die Kulissenscheibe ein Oldham^{®}-Scheibenteil einer Oldham^{®}-Kupplung umfasst, und somit winkelgetreu ist.

Die Aufgabe der Erfindung wird auch von einer Vorrichtung zum Bearbeiten von Werkstoffen, insbesondere von einer mechanischen Presse oder Exzenterpresse, mit einem Antrieb zum Antreiben eines Werkzeugs gelöst, wobei der Antrieb einen Drehmomentmotor und eine Kupplungseinrichtung umfasst, und wobei sich die Vorrichtung durch einen Antrieb und/oder einen Drehmomentmotor und/oder eine Kupplungseinrichtung nach einem der hier beschriebenen Merkmale auszeichnet.

Ist die Bearbeitungsvorrichtung zum Bearbeiten von Werkstoffen bzw. -stücken durch den hier beschriebenen Antrieb und/oder Drehmomentmotor und/oder die Kupplungseinrichtung ausgerüstet, kann diese Bearbeitungsvorrichtung wesentlich kompakter gebaut werden.

Bei der Vorrichtung kann es sich um eine Vorrichtung für Maschinen mit großem Antriebswellen-Durchmesser, etwa >= 150 mm, und mit hohem Drehmomentbedarf, etwa >= 1000 Nm, wie zum Beispiel Kurbel- und Exzenterpressen, Walzen, Kalander, Brecher, Rotor- und Schraubenwellen handeln.

Die vorliegende Bearbeitungsvorrichtung kann insofern bevorzugt als eine Umformvorrichtung zum Umformen von Werkstücken ausgestaltet sein.

Darüber hinaus wird die Aufgabe auch noch von einer Verwendung eines Rotationskörpers eines eine Welle treibenden Torquemotors als Funktionsbauteil einer Kupplungseinrichtung zum Ausgleichen einer Radialbewegung zwischen dem Torquemotor und der Welle gelöst.

Durch die Verwendung des Rotationskörpers des Torquemotors als Funktionsbauteil, welches als Radialbewegungsausgleichsbauteil ausgestaltet ist, der mit dem Torquemotor wirkverbundenen Kupplungseinrichtung, kann ein Antrieb, insbesondere einer werkstückumformenden Maschine, besonders kompakt bereitgestellt werden.

Das Radialbewegungsausgleichsbauteil ist hierbei ein erstes Kulissenführungsteil der Kupplungseinrichtung bzw. der Kulissenführungseinheit, welches bevorzugt Axialnocken trägt, welche in ein weiteres Kulissenführungsteil der Kupplungseinrichtung bzw. der Kulissenführungseinheit eingreifen.

Jedenfalls sind im Sinne der Erfindung das Kupplungsrotationsteil, das weitere Kulissenführungsteil und die Kulissenscheibe gleichbedeutend.

Die vorstehend beschriebenen Bauformen führen zu einer äußerst kompakten und kostengünstigen Bauweise, welche immer dann zum Einsatz kommen kann, wenn ein insbesondere Torquemotor direkt an eine Welle bzw. Arbeitswelle gekuppelt werden soll, bei welcher ein Achsversatz auftreten kann, und bei welcher ein freies Wellenende für weitere Anbauten zur Verfügung stehen muss. Ohne Vorschaltung von Getrieben oder dergleichen sind für einen Direktantrieb von insbesondere Kurbel- bzw. Exzentertrieben, zum Beispiel bei Schmiedepressen, große Drehmomente erforderlich. Die Dimensionen von entsprechenden Antriebsmotoren (Rotorteildurchmesser und Rotorteillänge), sind entsprechend eines Antriebsmotormomentenbedarfs in weiten Grenzen frei wählbar. Die Mantelfläche des Rotorteils ist hierbei dem Motormoment proportional. Für eine kompakte Bauweise sind zweckmäßigerweise Antriebsmotoren mit großem Rotorteildurchmesser und kleiner Rotorteillänge vorteilhaft.

Die vorliegende Erfindung zeichnet sich insbesondere noch dadurch aus, dass vorliegend selbst schlagartig auftretende Achsversätze und damit einhergehende meistens schlagartig auftretende Kräftespitzen absorbiert bzw. ausgeglichen werden können, wie dies beispielsweise an Antriebswellen von Exzenterpressen oder dergleichen der Fall ist.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Merkmale, Effekte und Vorteile vorliegender Erfindung werden anhand anliegender Zeichnung und nachfolgender Beschreibung erläutert, in welchen beispielhaft eine erfindungsgemäße Anordnung dargestellt und beschrieben ist.

Komponenten, welche in den einzelnen Figuren wenigstens im Wesentlichen hinsichtlich ihrer Funktion übereinstimmen, können hierbei mit gleichen Bezugszeichen gekennzeichnet sein, wobei die Komponenten nicht in allen Figuren beziffert und erläutert sein müssen.

In der Zeichnung zeigen:
- Figur 1: schematisch eine teilweise geschnittene Ansicht einer Verbindungsanordnung zwischen einem Antriebsmotor und einer Kupplungseinrichtung des erfindungsgemäßen Antriebs ;
- Figur 2: schematisch eine Aufsicht der Kupplungseinrichtung der in der Figur 1 gezeigten Verbindungsanordnung;
- Figur 3: schematisch eine teilweise geschnittene Ansicht einer alternativen Verbindungsanordnung zwischen einem Antriebsmotor und einer Kupplungseinrichtung des erfindungsgemäßen Antriebs ;
- Figur 4: schematisch eine perspektivische Ansicht einer Kupplungseinrichtung zum Ausgleichen einer Radialbewegung zwischen einem Kupplungsnabenteil und einem Kupplungsflanschteil, wobei das Kupplungsflanschteil ein Rotorteil eines Antriebsmotors ist; und
- Figur 5: schematisch eine weitere perspektivische Ansicht der in der Figur 4 gezeigten Kupplungseinrichtung.

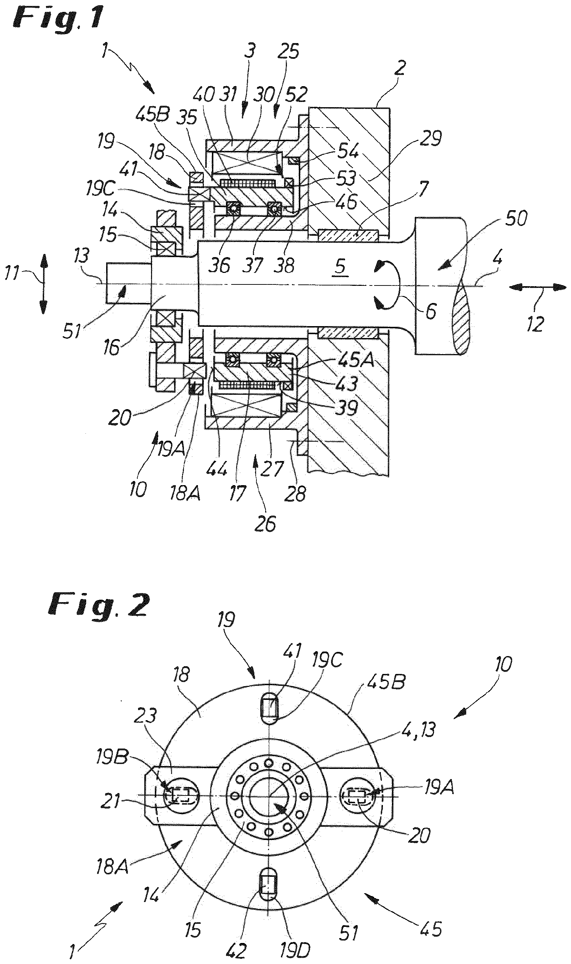

Der in den Figuren 1 und 2 teilweise gezeigte Antrieb 1 ist in diesem Ausführungsbeispiel einer Maschine 2 zugeordnet und er weist einen elektrischen Antriebsmotor 3 zum Antreiben einer um eine Wellendrehachse 4 drehbaren Welle 5 der Maschine 2 auf, mittels welcher ein hier nicht gezeigtes Werkzeug der Maschine 2 angetrieben werden kann.

Darüber hinaus weist der Antrieb 1 eine Kupplungseinrichtung 10 auf, mittels welcher der elektrische Antriebsmotor 3 und die Welle 5 miteinander wirkverbunden sind, so dass die Welle 5 in Drehrichtungen 6 um die Wellendrehachse 4 herum drehen kann.

Bei der Kupplungseinrichtung 10 handelt es sich im Wesentlichen um eine Ausgleichskupplungseinrichtung, mittels welcher insbesondere eine Radialbewegung 11 zwischen der Welle 5 und dem elektrischen Antriebsmotor 3 ausgeglichen werden kann, wobei sich diese Radialbewegung 11 auf die Längserstreckung der Wellendrehachse 4 in axialer Richtung 12 bezieht. Diese Kupplungseinrichtung 10 kann hierdurch insbesondere ein verschleißbedingtes zunehmendes Lagerspiel eines Gleitlagers 7 der drehbaren Welle 5 kompensieren.

Die Kupplungseinrichtung 10 hat eine Drehachse 13, welche zumindest bei einer nicht radial versetzten Welle 5 mit der Wellendrehachse 4 fluchtet.

Die Kupplungseinrichtung 10 folgt hierbei dem Aufbauprinzip einer Oldham^{®}-Kupplung, welche prinzipiell bereits aus dem Stand der Technik bekannt ist.

Insofern umfasst die Kupplungseinrichtung 10 ein um die Drehachse 13 drehbares Kupplungsnabenteil 14, welches mittels eines Wellen-Naben-Verbindungs-Spannsatzes 15 an einem Nabensitz 16 der Welle 5 festgelegt ist.

Des Weiteren weist die Kupplungseinrichtung 10 noch ein Kupplungsflanschteil 17 auf, mittels welchem die Kupplungseinrichtung 10 drehfest mit dem elektrischen Antriebsmotor 3 wirkverbunden ist.

Ferner weist die Kupplungseinrichtung 10 eine Kulissenscheibe 18 auf, in welchem eine Vielzahl an Kulissennuten 19 (nur exemplarisch beziffert) eingearbeitet sind.

Da die Kupplungseinrichtung 10 im Wesentlichen gemäß dem Aufbauprinzip einer Oldham^{®}-Kupplung aufgebaut ist, stellt die Kulissenscheibe 18 im weitesten Sinne auch eine Oldham^{®}-Kupplungsscheibe dar und ist somit winkelgetreu.

Die Kulissenscheibe 18 ist hierbei ein Kupplungsrotationsteil 18A, welches eine Radialbewegung 11 ausführen kann.

Das Kupplungsnabenteil 14 weist zwei sich gegenüberliegende Kupplungsnasen 20 und 21 auf, welche in zwei Kulissennuten 19A und 19B der Kulissennuten 19 der Kulissenscheibe 18 eingreifen, so dass das Kupplungsnabenteil 14 und die Kulissenscheibe 18 in Drehrichtungen 6 drehfest miteinander verbunden sind.

Die zwei sich gegenüberliegenden Kupplungsnasen 20 und 21 des Kupplungsnabenteils 14 sind an zwei sich entsprechend gegenüberliegenden Armbereichen 23 (nur exemplarisch beziffert, siehe Figur 2) angeordnet.

Somit sind das Kupplungsnabenteil 14 und die Kulissenscheibe 18 baulich einfach drehfest miteinander verbunden.

Bei dem elektrischen Antriebsmotor 3 handelt es sich um einen elektrisch betriebenen Drehmoment erzeugenden Drehmomentmotor 25 in Gestalt eines Torquemotors 26.

Der elektrische Antriebsmotor 3 weist ein Gehäuse 27 auf, mittels welchem er durch geeignete Schraubmittel 28 an einem Gestell 29 der Maschine 2 befestigt ist.

Darüber hinaus weist der elektrische Antriebsmotor 3 ein Statorteil 30 auf, welches drehfest in einem äußeren rohrförmigen Gehäuseteil 31 des Gehäuses 27 eingebaut und somit konzentrisch auch um die Drehachse 13 herum angeordnet ist.

Ferner weist der elektrische Antriebsmotor 3 ein Rotorteil 35 auf, welches mittels Rotorlagerelemente 36 und 37 in einem inneren rohförmigen Gehäuseteil 38 des Gehäuses 27 drehbar gelagert und somit ebenfalls konzentrisch auch um die Drehachse 13 herum angeordnet ist. An der dem Statorteil 30 zugewandten Seite 39 des Rotorteils 35 sind Permanentmagnetelemente 40 angeordnet.

Das Rotorteil 35 gestaltet zwei Kulissennocken 41 und 42 in Gestalt von Axialnocken aus, welche axial über einen ringförmigen Körper 43 des Rotorteils 35, genauer gesagt über eine Stirnaxialseite 44 des Rotorteils 35, hervorstehen, und welche somit bis in zwei Kulissennuten 19C und 19D der an der Kulissenscheibe 18 ausgebildeten Kulissennuten 19 eingreifen.

Somit ist das Rotorteil 35 zumindest teilweise derart eingreifend in das Kupplungsrotationsteil 18A angeordnet, dass das Kupplungsrotationsteil 18A radial beweglich zu der Drehachse 13, aber drehfest an dem Rotorteil 35 gelagert ist.

Insofern sind das Kupplungsflanschteil 17 und das Rotorteil 35 identisch.

Diese zwei Kulissennuten 19C und 19D bilden jeweils eine längliche Aufnahmenut für die Kulissennocken 41 und 42 bzw. die Axialnocken des Rotorteils 35 aus, wobei sich die jeweiligen Längserstreckung der zwei Kulissennuten 19C und 19D von radial weiter innen nach radial weiter außen erstreckt.

Hierdurch erlauben die in den zwei Kulissennuten 19C und 19D angeordneten Kulissennocken 41 und 42 bzw. die Axialnocken des Rotorteils 35 eine Radialbewegung 11 der Kulissenscheibe 18 gegenüber dem Rotorteil 35, so dass ein radialer Wellenversatz der Welle 5, aber auch ein axialer Wellenversatz der Welle 5, problemlos ausgeglichen werden können.

Somit gestalten die Kulissenscheibe 18 und das Rotorteil 35 gemeinsam eine Kulissenführungseinheit 45 aus, mittels welcher die Kulissenscheibe 18 und das Rotorteil 35 radial beweglich und drehfest zueinander gelagert sind.

Insofern ist das Rotorteil 35 bzw. das Kupplungsflanschteil 17 in diesem Ausführungsbeispiel ein erstes Kulissenführungsteil 45A der Kulissenführungseinheit 45, an welchem ein weiteres Kulissenführungsteil 45B radial verlagerbar angeordnet ist, wobei dieses weitere Kulissenführungsteil 45B identisch mit der Kulissenscheibe 18 ist.

Jedenfalls weist das Kupplungsflanschteil 17 einen Lagersitz 46 einer Wälz- oder Gleitlagerung des Drehmomentmotors 25 auf, mittels welcher das Kupplungsflanschteil 17 an dem Gehäuse 27 bzw. innerhalb des Gehäuses 27 des Drehmomentmotors 25 drehbar fixiert ist.

Besonders vorteilhaft ist es, dass vorliegend sowohl der Antriebsmotor 3 als auch die Kupplungseinrichtung 10 derart um die Welle 4 herum angeordnet sind, dass beide Wellenendbereiche 50 und 51 der Welle 5 unverbaut sind, so dass daran weitere Bauteile oder Bauteilgruppen (nicht gezeigt) an der Welle 5 fixiert werden können.

Beispielsweise bestünde hierdurch die Möglichkeit, an dem zweiten Wellenendbereich 51 einen Drehwinkelgeber (nicht gezeigt) anzuordnen. Besser ist es jedoch, einen diesbezüglichen Drehwinkelgeber 52 als Bandelement 53 an das Rotorteil 35 anzubringen, da hierdurch eine rotorgebundene Anbringung des Drehwinkelgebers 52 erzielt werden kann, bei welcher der Drehwinkelgeber 52 in unmittelbarer nähe zu einem gehäusegebundenen Abtasterelement 54 ermöglicht ist. Hierdurch können die Antriebsmotor 3 zugehörigen Komponenten, wie der rotorgebundene Drehwinkelgeber 52 und das gehäusegebundene Abtasterelement 54, ortsnah zueinander angeordnet werden, wodurch deren Wechselwirkung verbessert werden kann. Darüber hinaus ist hierdurch eine noch kompaktere Bauweise insbesondere in Bezug auf eine elektronische Steuerung (hier nicht explizit gezeigt) des Antriebsmotors 3 realisierbar.

Die Maschine 2 kann eine Vorrichtung mit einer Exzenterpresse sein, wobei die Welle 5 dementsprechend eine Exzenterwelle (nicht nochmals beziffert) ist, mittels welcher beispielsweise ein Presswerkzeug direkt oder indirekt angetrieben werden kann. Unter einem direkten Antrieb kann beispielsweise verstanden werden, dass auf der Achse direkt das Werkzeug montiert ist. Dies ist beispielsweise beim Walzen der Fall. Unter einem indirekten Antrieb kann verstanden werden, dass zwischen angetriebener Welle und Werkzeug noch zwischengeschaltete Einheiten, wie beispielsweise Getriebe angeordnet sind.

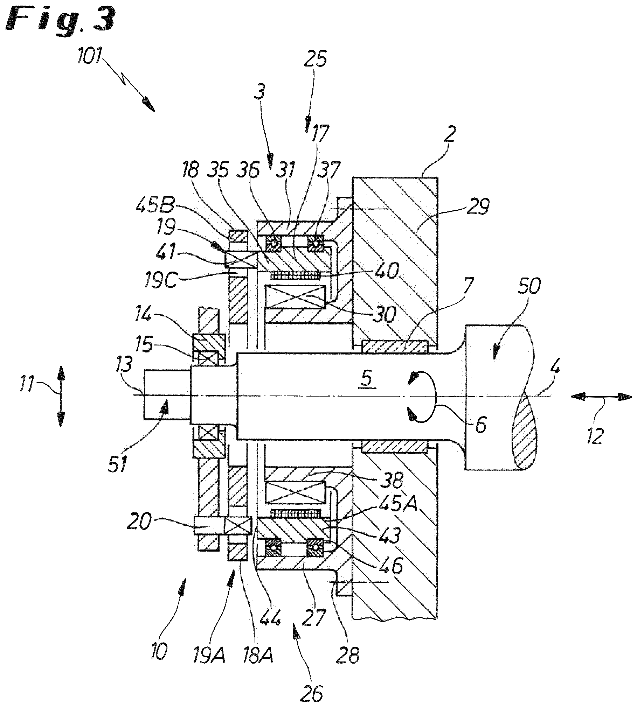

Der in der Figur 3 gezeigte weitere Antrieb 101 ist im Wesentlichen baugleich mit dem in den Figuren 1 und 2 gezeigten Antrieb 1. Insofern sind nachfolgend unter Beibehaltung der Bezugsziffern nur kurz die Unterschiede zwischen den Antrieben 1 und 101 erläutert. Hinsichtlich des Aufbaus und der Funktionsweise des weiteren Antriebs 101 wird auf die vorstehende Beschreibung verwiesen, um Wiederholungen zu vermeiden.

Der weitere Antrieb 101 (Figur 3) unterscheidet sich von dem Antrieb 1 (Figuren 1 und 2) lediglich dadurch, dass das Statorteil 30 an dem äußeren rohrförmigen Gehäuseteil 31 und das Rotorteil 35 entsprechend an dem inneren rohrförmigen Gehäuseteil 38 gelagert sind.

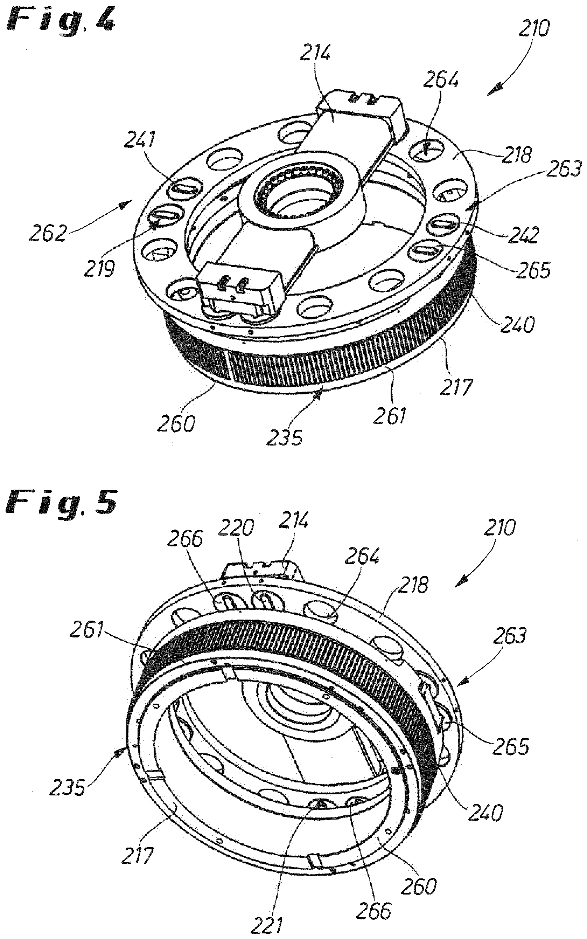

Die in den Figuren 4 bis 5 gezeigte weitere Kupplungseinrichtung 210 zum Wirkverbinden eines Antriebsmotors eines Antriebs mit einer Welle weist ein Kupplungsnabenteil 214, ein Kupplungsflanschteil 217 und eine radial gegenüber dem Kupplungsflanschteil 217 verlagerbare Kulissenscheibe 218 auf, wobei das Kupplungsflanschteil 217 sogleich ein Rotorteil 235 des Antriebsmotors ausgestaltet, so dass dieser Antriebsmotor mit seinem Rotorteil 235 ein integraler Bestandteil der Kupplungseinrichtung 210 ist.

Das Rotorteil 235 und damit auch das Kupplungsflanschteil 217 weist ein Rotorringelement 260 auf, auf dessen Mantelfläche 261 eine Vielzahl an Permanentmagnetelemente 240 angeordnet ist, welche mit einem Stator (nicht gezeigt) des Antriebsmotors wechselwirkt.

Das Rotorteil 235 bzw. das diesbezügliche Rotorringelement 260 weist zwei Nockenpaare 262 und 263 mit jeweils zwei Kulissennocken 241 bzw. 242 (nur exemplarisch beziffert) auf. Die zwei Kulissennocken 241 und 242 besitzen jeweils eine Längserstreckung, welche parallel zueinander verlaufen, so dass insgesamt eine Radialverschiebung zwischen dem Rotorringelement 260 und der Kulissenscheibe 218 möglich ist.

Die Kulissenscheibe 218 weist eine Vielzahl an kreisrunden Materialausnehmungen 264 (nur exemplarisch beziffert) auf, in welcher einerseits als längliche Kulissennuten 219 (ebenfalls nur exemplarisch beziffert) entsprechend ausgebildeten Gleitbuchsen 265 gehaltert sind, so dass die Kulissennocken 241 bzw. 242 radial beweglich in diesen Gleitbuchsen 265 gelagert sind. Andererseits sind in diesen kreisrunden Materialausnehmungen 264 weitere Gleitbuchsen 266 gehaltert, mittel welchen Kulissennasen 220 bzw. 221 des Kupplungsnabenteils 214 gelagert sind.

An dieser Stelle sei explizit darauf hingewiesen, dass die Merkmale der vorstehend bzw. in den Ansprüchen und/oder Figuren beschriebenen Lösungen gegebenenfalls auch kombiniert werden können, um die erläuterten Merkmale, Effekte und Vorteile entsprechend kumuliert umsetzen bzw. erzielen zu können.

Es versteht sich, dass es sich bei den vorstehend erläuterten Ausführungsbeispielen lediglich um eine erste Ausgestaltungen der Erfindung handelt. Insofern beschränkt sich die Ausgestaltung der Erfindung nicht auf diese Ausführungsbeispiele.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Antrieb
- 2: Maschine
- 3: Antriebsmotor
- 4: Wellendrehachse
- 5: Welle
- 6: Drehrichtungen
- 7: Gleitlager
- 10: Kupplungseinrichtung
- 11: Radialbewegung
- 12: axiale Richtung
- 13: Drehachse
- 14: Kupplungsnabenteil
- 15: Wellen-Naben-Verbindungs-Spannsatz
- 16: Nabensitz
- 17: Kupplungsflanschteil
- 18: Kulissenscheibe
- 18A: Kupplungsrotationsteil
- 19: Kulissennuten
- 19A: erste Kulissennut
- 19B: zweite Kulissennut
- 19C: dritte Kulissennut
- 19D: vierte Kulissennut
- 20: erste Kupplungsnase
- 21: zweite Kupplungsnase
- 23: Armbereiche
- 25: Drehmomentmotor
- 26: Torquemotor
- 27: Gehäuse
- 28: Schraubmittel
- 29: Gestell
- 30: Statorteil
- 31: äußeres rohrförmiges Gehäuseteil
- 35: Rotorteil
- 36: erstes Rotorlagerelement
- 37: zweites Rotorlagerelement
- 38: inneres rohförmiges Gehäuseteil
- 39: zugewandte Seite
- 40: Permanentmagnetelemente
- 41: erster Kulissennocken
- 42: zweiter Kulissennocken
- 43: ringförmiger Körper
- 44: Stirnaxialseite
- 45: Kulissenführungseinheit
- 45A: erstes Kulissenführungsteil
- 45B: weiteres Kulissenführungsteil
- 46: Lagersitz
- 50: erster Wellenendbereich
- 51: zweiter Wellenendbereich
- 52: Drehwinkelgeber
- 53: Bandelement
- 54: Abtasterelement

- 101: weiterer Antrieb

- 210: weitere Kupplungseinrichtung
- 214: Kupplungsnabenteil
- 217: Kupplungsflanschteil
- 218: Kulissenscheibe
- 219: Kulissennuten
- 220: erste Kupplungsnasen
- 221: zweite Kupplungsnasen
- 235: Rotorteil
- 240: Permanentmagnetelemente
- 241: erste Kulissennocken
- 242: zweite Kulissennocken
- 260: Rotorringelement
- 261: Mantelfläche
- 262: erstes Nockenpaar
- 263: zweites Nockenpaar
- 264: Materialausnehmungen
- 265: Gleitbuchsen
- 266: weitere Gleitbuchsen

## Patentansprüche

1. Antrieb (1; 101) einer Maschine (2) mit einem Antriebsmotor (3) zum Direktantrieb ohne zwischengeschaltetes Getriebe einer um eine Wellendrehachse (4) drehbaren Arbeitswelle (5) der Maschine (2) und mit einer den Antriebsmotor (3) und die Arbeitswelle (5) wirkverbindenden Kupplungseinrichtung (10) zum Ausgleichen der Relativbewegungen (11) zwischen der Antriebswelle (5) und dem Antriebsmotor (3), bei welchem der Antriebsmotor (3) ein die Welle (5) umschließendes Rotorteil (35) aufweist, an welchem ein um die Wellendrehachse (4) rotierbares Kupplungsrotationsteil (18A) der Kupplungseinrichtung (10) gelagert ist, wobei das Rotorteil (35) zumindest teilweise derart eingreifend in das Kupplungsrotationsteil (18A) angeordnet ist, dass das Kupplungsrotationsteil (18A) radial beweglich an dem Rotorteil (35) gelagert ist, wobei sowohl der Antriebsmotor (3) als auch die Kupplungseinrichtung (10) derart um die Arbeitswelle (5) herum angeordnet sind, dass die Arbeitswellenendbereiche (50, 51) der Arbeitswelle (5) unverbaut sind, ***dadurch gekennzeichnet, dass*** das Rotorteil (35) wenigstens einen Kulissennocken (41, 42) aufweist, welcher in einer durch das Kupplungsrotationsteil (18A) ausgestalten Kulissennut (19; 19C, 19D) angeordnet ist.

2. Antrieb (1; 101) nach Anspruch 1, ***dadurch gekennzeichnet, dass*** das Kupplungsrotationsteil (18A) und das Rotorteil (35) gemeinsam eine Kulissenführungseinheit (45) ausgestalten, mittels welcher das Kupplungsrotationsteil (18A) radial beweglich unmittelbar an dem Rotorteil (35) drehfest gelagert ist.

3. Antrieb (1; 101) nach Anspruch 2, ***dadurch gekennzeichnet, dass*** der wenigstens eine Kulissennocken (41, 42) axial über eine Stirnaxialseite (44) des Rotorteils (35) hinausragt.

4. Antrieb (1; 101) nach Anspruch 2 oder 3, ***dadurch gekennzeichnet, dass*** der wenigstens eine Kulissennocken (41, 42) radial von der Arbeitswellendrehachse (4) beabstandet angeordnet ist.

5. Antrieb (1; 101) nach einem der Ansprüche 1 bis 4, ***dadurch gekennzeichnet, dass*** das Kupplungsrotationsteil (18A) radialbeweglich mit einem an der Arbeitswelle (5) gelagerten Kupplungsnabenteil (14) der Kupplungseinrichtung (10) wirkverbunden ist.

6. Antrieb (1; 101) nach Anspruch 5, ***dadurch gekennzeichnet, dass*** das Kupplungsrotationsteil (18A) und das Kupplungsnabenteil (14) mittels in Kulissennuten (19, 19A, 19B) eingreifenden Kupplungsnasen(20, 21) miteinander wirkverbunden sind.

7. Antrieb (1; 101) nach einem der Ansprüche 1 bis 6, ***dadurch gekennzeichnet, dass*** das Kupplungsrotationsteil (18A) ein Oldham^{®}-Scheibenteil einer Oldham^{®}-Kupplung umfasst.

8. Vorrichtung (2) zum Bearbeiten von Werkstoffen, insbesondere mechanische Presse oder Exzenterpresse, mit einem Antrieb (3; 101) zum Direktantrieb ohne Zwischenschaltung eines Getriebes eines Werkzeugs, wobei der Antrieb (3; 101) einen Drehmomentmotor (25) und eine Kupplungseinrichtung (10) umfasst, ***dadurch gekennzeichnet, dass*** die Vorrichtung (2) einen Antrieb (1; 101) nach einem der Ansprüche 1 bis 7 umfasst.

## Claims

1. Drive (1; 101) of a machine (2) with a drive motor (3) for direct drive, without an intermediate transmission of a work shaft (5), which is rotatable about a shaft axis (4) of rotation, of the machine (2), and with a coupling device (10), which is operatively connected with the drive motor (3) and the work shaft (5), for compensation for relative movements (11) between the work shaft (5) and drive motor (3), in which the drive motor (3) comprises a rotor part (35) which surrounds the shaft (5) and on which a coupling rotary part (18A), which is rotatable about the shaft axis (4) of rotation, of the coupling device (10) is mounted, wherein the rotor part (35) is arranged to engage at least in part in the coupling rotary part (18A) in such a way that the coupling rotary part (18A) is mounted on the rotor part (35) to be radially movable, wherein not only the drive motor (3), but also the coupling device (10) are so arranged around the work shaft (5) that the work shaft end regions (50, 51) of the work shaft (5) are unobstructed, **characterised in that** the rotor part (35) comprises at least one gate dog (41, 42) which is arranged in a gate groove (19; 19C, 19D) formed by the coupling rotary part (18A).

2. Drive (1; 101) according to claim 1, **characterised in that** the coupling rotary part (18A) and the rotor part (35) together form a gate guide unit (45) by means of which the coupling rotary part (18A) is mounted directly on the rotor part (35) to be radially movable, but secure against relative rotation.

3. Drive (1; 101) according to claim 2, **characterised in that** the at least one gate dog (41, 42) projects axially beyond an axial end face (44) of the rotor part (35).

4. Drive (1; 101) according to claim 2 or 3, **characterised in that** the at least one gate dog (41, 42) is arranged at a radial spacing from the work shaft axis (4) of rotation.

5. Drive (1; 101) according to any one of claims 1 to 4, **characterised in that** the coupling rotary part (18A) is operatively connected with a coupling hub part (14), which is mounted on the work shaft (5), of the coupling device (10) to be radially movable.

6. Drive (1; 101) according to claim 5, **characterised in that** the coupling rotary part (18A) and the coupling hub part (14) are operatively connected together by means of coupling projections (20, 21) engaging in gate grooves (19, 19A, 19B).

7. Drive (1; 101) according to any one of claims 1 to 6, **characterised in that** the coupling rotary part (18A) comprises an Oldham (Registered Trade Mark) disc part of an Oldham (Registered Trade Mark) coupling.

8. Device (2) for processing materials, particularly mechanical press or eccentric press, comprising a drive (3; 101) for direct drive, without interposition of a transmission, of a tool, wherein the drive (3; 101) comprises a torque motor (25) and a coupling device (10), **characterised in that** the device (2) comprises a drive (1; 101) according to any one of claims 1 to 7.

## Revendications

1. Entrainement (1 ; 101) d'une machine (2) qui comprend un moteur d'entraînement (3), destiné à l'entrainement direct, en l'absence d'une transmission intermédiaire, d'un arbre de travail (5) de la machine (2) apte à effectuer des rotations autour d'un axe de rotation d'arbre (4), et qui comprend un mécanisme d'accouplement (10) qui met en liaison opérationnelle le moteur d'entrainement (3) et l'arbre de travail (5), à des fins de compensation des mouvements relatifs (11) entre l'arbre de travail (5) et le moteur d'entrainement (3) ; dans lequel le moteur d'entrainement (3) présente un élément (35) faisant office de rotor qui entoure l'arbre (5), contre lequel est monté un élément de rotation d'accouplement (18A) du mécanisme d'accouplement (10) apte à effectuer des rotations autour de l'axe de rotation d'arbre (4) ; dans lequel l'élément (35) faisant office de rotor est disposé, au moins en partie, d'une manière telle qu'il vient s'engrener dans l'élément de rotation d'accouplement (18A), tant et si bien que l'élément de rotation d'accouplement (18A) est monté en mobilité radiale contre l'élément (35) faisant office de rotor; dans lequel, aussi bien le moteur d'entrainement (3) que le mécanisme d'accouplement (10) sont disposés autour de l'arbre de travail (5) d'une manière telle que les zones terminales (50, 51) de l'arbre de travail (5) sont dégagées ; **caractérisé en ce que** l'élément (35) faisant office de rotor présente au moins une came sous la forme d'une coulisse (41, 42) qui est disposée dans une rainure (19; 19C, 19D) destinée à une coulisse, réalisée par l'intermédiaire de l'élément de rotation d'accouplement (19 ; 19C, 19D).

2. Entrainement (1; 101) conformément à la revendication 1, **caractérisé en ce que** l'élément de rotation d'accouplement (18A) et l'élément (35) faisant office de rotor forment ensemble une unité de guidage (45) pour une coulisse, au moyen de laquelle l'élément de rotation d'accouplement (18A) est monté, d'une manière apte à se déplacer en direction radiale, en antirotation, directement contre l'élément (35) faisant office de rotor.

3. Entrainement (1 ; 101) conformément à la revendication 2, **caractérisé en ce que** ladite au moins une came (41, 42) sous la forme d'une coulisse fait saillie dans la direction axiale au-delà d'un côté axial avant (44) de l'élément (35) faisant office de rotor.

4. Entrainement (1 ; 101) conformément à la revendication 2 ou 3, **caractérisé en ce que** ladite au moins une came (41, 42) sous la forme d'une coulisse est disposée à distance, dans la direction radiale, de l'axe de rotation (4) de l'arbre de travail.

5. Entrainement (1 ; 101) conformément à l'une quelconque des revendications 1 à 4, **caractérisé en ce que** l'élément de rotation d'accouplement (18A) est relié de manière opérationnelle, en mobilité radiale, à un élément (14) du mécanisme d'accouplement (10), sous la forme d'un moyeu d'accouplement qui est monté contre l'arbre de travail (5).

6. Entrainement (1; 101) conformément à la revendication 5, **caractérisé en ce que** l'élément de rotation d'accouplement (18A) et l'élément (14) sous la forme d'un moyeu d'accouplement sont reliés l'un à l'autre de manière opérationnelle au moyen de nez d'accouplement (21) qui viennent s'engrener dans des rainures (19, 19A, 19B) destinées à une coulisse.

7. Entrainement (1 ; 101) conformément à l'une quelconque des revendications 1 à 6, **caractérisée en ce que** l'élément de rotation d'accouplement (18A) représente un élément en forme de disque de type Oldham^{®} d'un accouplement de type Oldham^{®}.

8. Dispositif (2) destiné au traitement de matériaux, en particulier presse mécanique ou presse à excentrique, qui comprend un entraînement (3; 101) destiné à l'entrainement direct en l'absence d'une transmission intermédiaire d'un engrenage d'un outil; dans lequel l'entrainement (3 ; 101) comprend un moteur à couple (25) et un mécanisme d'accouplement (10), **caractérisé en ce que** le dispositif (2) comprend un entraînement (1 ; 101) en conformité avec l'une quelconque des revendications 1 à 7.
